# FASCICULE DE BREVET EUROPEEN

(11) **EP 3 455 718 B1**
(45) Date de publication et mention de la délivrance du brevet: **07.07.2021**
(21) Numéro de dépôt: 17727499.0
(22) Date de dépôt: 12.05.2017
(51) Int. Cl.: G06F 3/147

(54) **SYSTÈME PERMETTANT LA CRÉATION ET LE DÉPLOIEMENT D'APPLICATIONS MULTIPLATEFORMES**
SYSTEM ZUR ERSTELLUNG UND BEREITSTELLUNG VON MULTIPLATTFORMANWENDUNGEN
SYSTEM FOR THE CREATION AND DEPLOYMENT OF MULTIPLATFORM APPLICATIONS

(30) Priorité: 12.05.2016 FR 1654272
(43) Date de publication de la demande: 20.03.2019
(73) Titulaire: Mindus S.A.R.L, 98000 Monaco (MC)
(72) Inventeur: MINDUS, Christopher, 06560 Valbonne (FR)
(74) Mandataire: Hautier IP
(86) Numéro de dépôt international: PCT/EP2017/061535
(87) Numéro de publication internationale: WO 2017/194777

(56) Documents cités:
- US-A1- 2006 123 345
- US-A1- 2006 179 118
- US-A1- 2008 082 603
- US-A1- 2013 339 871

## Description

### DOMAINE DE L'INVENTION

La présente invention est relative notamment à un système et à un procédé pour développer et déployer une application universelle.

Une application préférée concerne l'industrie des services utilisant des applications, et plus précisément les services de développement d'applications universelles.

### ARRIERE-PLAN TECHNOLOGIQUE

Dans ce dernier domaine, on connait des solutions permettant de développer une application universelle. C'est-à-dire, une application capable de fonctionner sur plusieurs plateformes, c'est-à-dire sur plusieurs types d'appareils client. Les applications représentent aujourd'hui un marché très important. Néanmoins ce marché est divisé en plusieurs plateformes de développement et d'utilisation. Par exemple, les ordinateurs et les appareils mobiles représentent chacun une plateforme indépendante. La plateforme regroupant les ordinateurs comprend plusieurs types de matériels et de logiciels. De ce fait, plusieurs développements sont nécessaires pour que l'application soit compatible sur l'ensemble du matériel de la plateforme d'ordinateurs. Un développement indépendant est aussi généralement nécessaire pour que l'application fonctionne sur les différents systèmes d'exploitation (Windows®, Mac OSX® ou encore Linux®).

La plateforme comprenant les appareils mobiles quant à elle reprend l'ensemble des téléphones intelligents (ordiphone ou smartphone) et les ardoises numériques (tablette tactile). Ces appareils ont des architectures logicielles et matérielles différentes des ordinateurs. Les appareils mobiles fonctionnent généralement sous des systèmes d'exploitation spécifiques. Les plus connus sont notamment les systèmes Android®, iOS® ou encore Windows Phone®. Chacune des plateformes ordinateur et appareil mobile, associées à la variété des systèmes d'exploitation possiblement installables sur ces plateformes, nécessite un développement particulier et unique. En effet, les différences de matériels (puissances des processeurs, tailles des écrans, nombres de pixels, présence de capteurs spécifiques, présence d'un écran tactile ou non, etc.) et les différences de systèmes d'exploitation sont telles qu'il est nécessaire de développer une application spécifique pour chacune des plateformes, et plus précisément pour chacun des systèmes d'exploitation. Et encore, même au sein d'une plateforme donnée utilisant un système d'exploitation commun, des différences peuvent exister dans les applications pour prendre en compte les spécificités matérielles de l'appareil sur lequel sera installée l'application. C'est notamment le cas des applications développées spécialement pour tablettes tactiles.

La solution trouvée pour éviter ce temps et ces coûts de développement répétitifs a été de créer des applications web, c'est-à-dire des applications sur la toile internet. Des solutions dans l'art antérieur reprennent cette idée comme US2006/179118. En effet, en utilisant des applications dans sur la toile internet et dans lesquelles seule l'interface est déportée sur l'appareil client utilisé par un utilisateur, tout appareil client ayant un navigateur internet peut utiliser l'application. Cela économise de nombreux développements d'applications et facilite les mises à jour. Cette solution, bien que facile à mettre en place, pose cependant certains problèmes. En effet, l'adaptation de l'application aux différents matériels des appareils client et notamment aux tailles d'écrans, ou à la présence d'écrans tactiles n'est pas optimale. De plus, l'application peut ne pas pouvoir utiliser l'ensemble des fonctionnalités présentes dans l'appareil client comme par exemple, les gyroscopes, les micros, les caméras ou tout autre outil à disposition dans un appareil électronique. Enfin, la consommation de mémoire et de batterie de l'appareil client n'est pas optimale.

Une autre solution mise au point pour faciliter le développement d'applications multiplateformes, c'est-à-dire sur plusieurs types d'appareils client a été de coder une application dans un langage spécifique et de compiler ensuite le code dans un langage compatible avec la plateforme visée. Cette solution avantageuse permet le développement d'une seule application qui peut ensuite être installée sur l'ensemble des appareils client, tout en profitant de toutes les fonctionnalités mises à dispositions par ledit appareil client. Néanmoins, l'application développée ne sera pas parfaitement optimisée pour l'ensemble des appareils client. De plus lors de mises à jour desdits appareils client (matérielle et/ou logicielle) ou de l'application, il est nécessaire de coder spécifiquement la mise à jour pour chacun des types d'appareils client sur lesquels l'application est installée.

L'invention permet de résoudre tout ou partie des inconvénients des techniques actuelles.

### RESUME DE L'INVENTION

Avantageusement, l'invention permet la mise en place d'un système permettant la création et le déploiement d'applications sur plusieurs types d'appareils client, comprenant au moins une application client hébergée sur au moins un appareil client, et un serveur hébergeant au moins une application principale, ladite application principale comprenant au moins une partie logique et une partie graphique comprenant et un module virtuel de stockage d'au moins une interface utilisateur désigné espace de panneaux , caractérisé en ce que ladite application principale comprend un sélecteur d'interface configuré de manière à faire correspondre un type d'interface utilisateur à chaque type d'appareil client et un module virtuel de gestion des interfaces graphiques désigné espace virtuel, ledit espace virtuel :
- comprend au moins un module de communication de données, désigné namespace,
- est configurée pour permettre la communication entre la partie logique de l'application principale et la partie graphique,
- est configurée pour stocker en permanence l'état d'activation de l'application principale suite à des modifications ordonnées par au moins l'une des applications clientes,
le système étant configuré de manière à effectuer au moins les étapes suivantes en réponse à une activation de la au moins une application client, ces étapes étant exécutées par au moins un microprocesseur :
- recevoir depuis l'appareil client au travers du sélecteur d'interface des données d'utilisation,
- transmettre lesdites données d'utilisation à l'espace de panneaux,
- transmettre depuis l'espace de panneaux lesdites données d'utilisation à l'espace virtuel,
- envoyer depuis l'espace virtuel les données d'utilisation à la partie logique,
- traiter les données d'utilisation par la partie logique,
- transmettre, depuis la partie logique, les données d'utilisation traitées à l'espace virtuel avec un statut de données traitées,
- transmettre depuis l'espace virtuel les données traitées à l'espace de panneaux,
- transmettre depuis l'espace de panneaux les données traitées à la au moins une application client.

Cette caractéristique essentielle permet d'avoir une sélection de la partie graphique parfaitement adaptée avec un appareil client tout en conservant un seul développement pour la partie logique. On va ainsi économiser un temps de codage conséquent.

De plus, la séparation de la partie graphique en deux sous-espaces permet de gérer collectivement l'ensemble les interfaces graphiques de l'espace de panneaux grâce à l'espace virtuel. L'espace virtuel permet ainsi la création « d'un langage commun » permettant le traitement par la partie logique de données d'utilisation émises dans des langages non compatibles.

L'invention concerne aussi un système permettant la création et le déploiement d'applications sur plusieurs types d'appareils client, comprenant au moins une application client hébergée sur au moins un appareil client, et un serveur hébergeant au moins une application principale, ladite application principale comprenant une partie logique et une partie graphique.

De manière préférentielle, la partie graphique de l'application principale est répartie entre un module virtuel de stockage d'au moins une interface utilisateur désigné espace de panneaux et un module virtuel de gestion des interfaces graphiques désigné espace virtuel, le système étant configuré de manière à effectuer au moins les étapes suivantes en réponse à une activation de la au moins une application client, ces étapes étant exécutées par au moins un microprocesseur :
- transmettre depuis l'appareil client des données d'utilisation à l'espace de panneaux,
- transmettre depuis l'espace de panneaux lesdites données d'utilisation à l'espace virtuel,
- envoyer depuis l'espace virtuel les données d'utilisation à la partie logique,
- traiter les données d'utilisation part la partie logique,
- transmettre depuis la partie logique les données d'utilisation à l'espace virtuel avec un statut de données traitées,
- transmettre depuis l'espace virtuel les données traitées à l'espace de panneaux,
- transmettre depuis l'espace de panneaux les données traitées à la au moins une application client.

Ainsi, grâce à l'innovation de l'invention, l'application principale fonctionne comme une application virtuelle hébergée sur un serveur. On a une seule application, un seul code qui est de préférence un code Java. Le code Java n'est nativement pas compatible avec l'ensemble des appareils client (par exemple incompatibilité avec les IPhone® et IOS®). L'interface de l'application principale comprend plusieurs interfaces utilisateur qui s'afficheront en fonction des données des appareils client afin notamment d'activer ou non des fonctions spécifiques. L'application principale reste active sur le serveur, et plus précisément dans l'espace virtuel même lorsque la communication avec l'appareil client est interrompue, ou que l'appareil client utilisé change. Enfin, l'application principale peut utiliser l'ensemble des fonctionnalités des appareils client. En effet, l'interface utilisateur s'adaptant à chacun des appareils client, elles peuvent prendre en compte les fonctionnalités spécifiques des appareils client.

L'ensemble de ces caractéristiques permet le développement et le déploiement d'applications beaucoup plus rapidement. Cela permet notamment une économie de temps et de ressources (consommation d'énergies, mémoire et stockage sur le téléphone). L'appareil client est principalement utilisé pour afficher des données. Ainsi, la consommation de ressources du processeur est largement réduite. Ce qui entraine de facto une amélioration de l'autonomie. Enfin, le nombre de fonctionnalités peut être supérieur à la capacité de calcul de l'appareil client sur lequel l'application aurait dû être installée sans l'invention.

L'invention permet aussi de faire fonctionner une application sur un serveur distant et d'avoir le rendu sur une application cliente, d'adapter l'interface utilisateur à chaque appareil client différent, tout en conservant l'application active dans le serveur, et ce grâce à un espace virtuel qui conserve l'application client active dans ledit espace virtuel peu importe que ladite application cliente soit connectée avec le serveur. Ainsi, l'invention permet de conserver en fonctionnement chacune des applications clientes lancées dans un espace virtuel. Cette caractéristique permet notamment l'utilisation simultanée de plusieurs appareils clients différents comprenant des interfaces utilisateurs différentes.

Cela permet aussi de ne jamais perdre une session et de pouvoir avoir une continuité parfaite entre les appareils et en cas de déconnexion avec le serveur.

L'espace virtuel de l'invention est plus qu'un simple lien entre les interfaces utilisateurs stockées sur le serveur et les applications clientes. En effet, l'espace virtuel de la présente invention est un environnement virtuel complet.

Qui plus est, cet espace virtuel est nécessaire pour l'utilisation simultanée de plusieurs clients en même temps.

Une gestion simultanée de plusieurs clients est donc possible avec l'invention.

Grâce à l'espace virtuel, l'interface utilisateur n'a pas à être générée une nouvelle fois à chaque démarrage de la session. En effet, les interfaces utilisateurs dans l'espace virtuel ne cessent jamais leurs fonctionnements. Ainsi, il n'y a pas d'étape de génération d'interface à chaque reprise de session. Les interfaces sont déjà générées et restent actives dans le serveur et plus précisément dans l'espace virtuel. Ce qui permet notamment l'utilisation simultanée et synchronisée de plusieurs appareils simultanément. Cette caractéristique n'est possible qu'avec l'espace virtuel de l'invention.

L'invention est aussi relative à ce que l'espace virtuel comprend au moins un module de communication de données, désigné namespace, permettant la communication entre la partie logique de l'application principale et l'espace de panneaux.

La création d'un namespace permet notamment d'avoir un socle commun permettant notamment une synchronisation entre toutes les interfaces utilisateur différentes. Ce socle commun permet notamment l'activation d'une fonction appelée « follow me » qui permet entre autres d'avoir une synchronisation de l'affichage de l'ensemble des interfaces utilisateur sur l'ensemble des appareils client. De plus, cela permet d'arrêter et de reprendre une session à partir de n'importe quel appareil client sans perte de données.

L'invention concerne aussi un procédé de mise en œuvre des systèmes, décrit précédemment et dans lequel l'utilisation de la au moins une application client entraine les étapes suivantes :
- transmission des données d'utilisation depuis un appareil client vers l'espace de panneaux au travers du sélecteur d'interface,
- transmission des données d'utilisation depuis l'espace de panneaux à l'espace virtuel,
- transmission des données d'utilisation depuis l'espace virtuel à la partie logique,
- traitement par la partie logique des données d'utilisation,
- transmission des données d'utilisation par la partie logique à l'espace virtuel avec un statut de données traitées,
- transmission des données traitées par l'espace à l'espace de panneaux,
- transmission des données traitées par l'espace de panneaux à la au moins une application client.

Ce procédé permet avantageusement l'utilisation d'une l'application principale sur n'importe quel type d'appareils client. Cela est notamment possible grâce au traitement des calculs dans une partie logique de l'application principale déportée de la partie graphique. Cette séparation permet notamment une économie de ressource en terme d'énergie et de puissance de calcul.

Enfin, selon un autre aspect, la présente invention porte sur un produit-programme d'ordinateur ou sur un média non-transitoire lisible par un ordinateur, comprenant des instructions, qui lorsqu'elles sont effectuées par au moins un processeur, exécutent les étapes du procédé selon l'invention mentionnée ci-dessus.

### BREVE INTRODUCTION DES FIGURES

D'autres caractéristiques, buts et avantages de la présente invention apparaitront à la lecture de la description détaillée qui suit, et en regard des dessins annexés donnés à titre d'exemple non limitatifs et sur lesquels :
- la figure 1 montre une vue d'ensemble d'une réalisation du système ;
- les figures 1a montre une illustration concrète des différents panneaux et de leurs correspondances en fonction des appareils clients. La figure 1a montre un exemple sur ordiphone, ainsi que la correspondance avec une ardoise tactile et/ou un ordinateur ;
- la figure 2 est une vue d'ensemble d'un système comprenant plusieurs applications principales ;

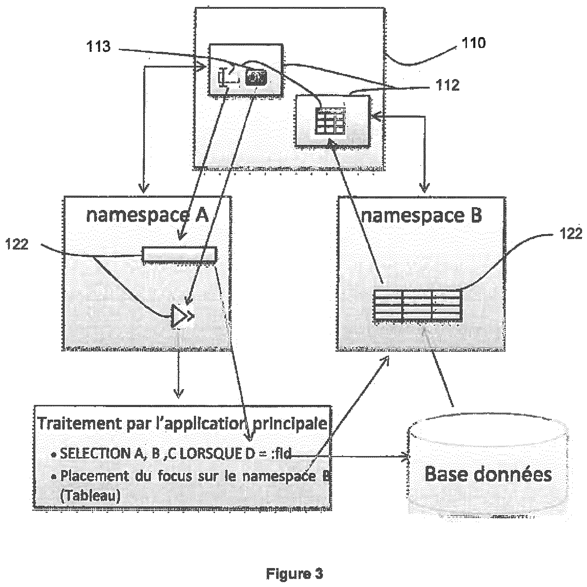

- la figure 3 montre les interactions entre l'espace virtuel, l'espace de panneaux et la partie logique de l'application principale ;
- La figure 4 montre les étapes pour l'ouverture d'une session, la sécurisation des données, et, en cas de coupure et de reconnexion, les étapes nécessaires à ladite reconnexion.

### DESCRIPTION DETAILLEE

Avant d'entrer dans le détail de formes préférées de réalisation de l'invention en référence aux dessins notamment, d'autres caractéristiques optionnelles de l'invention, qui peuvent être mises en oeuvre de façon combinée selon toutes combinaisons ou de manière alternative, sont indiquées ci-après :
- L'espace de panneaux comprend au moins une interface utilisateur et un sélecteur d'interface, de manière à ce que chacune des interfaces utilisateur corresponde à un type d'appareil client. Bien entendu une interface utilisateur peut aussi correspondre à plusieurs types d'appareils client.
- la sélection de l'interface utilisateur à afficher sur l'application client est réalisée par le sélecteur d'interface utilisateur en fonction d'données transmises au sélecteur par l'application client.
- les données transmises au sélecteur d'interface utilisateur sont prises parmi les caractéristiques suivantes de l'appareil client sur lequel est installée l'application client : fonctionnalités de l'appareil client, orientation de l'appareil client dans l'espace, thème de l'interface utilisateur de l'appareil client, type de l'appareil client, taille de l'écran de l'appareil client, système d'exploitation de l'appareil client, langue et géolocalisation de l'appareil client.
- chacune des d'interfaces utilisateur comprend plusieurs panneaux.
- l'application client est configurée pour afficher un seul panneau à la fois.
- chacun des panneaux comprend au moins un widgets tel que des boutons d'action et/ou des champs de remplissage.
- le au moins un namespace comprend au moins un objet d'interaction tel qu'un champ de remplissage et/ou un tableau et/ou une action.
- chacun des panneaux est associé à un namespace.
- chacun des panneaux associés à un namespace est configuré pour recevoir et envoyer des données au namespace associé grâce à l'activation des widgets et/ou des objets d'interaction.
- une pluralité appareils client sont connectés à une session utilisateur unique, et dans lequel chaque modification sur l'une des interfaces utilisateur est répercutée sur les autres interfaces utilisateur affichées sur les différents appareils client.
- l'activation d'un widget présent sur le panneau affiché sur l'appareil client entraine successivement au moins les actions suivantes :
   - transmission au panneau correspondant dans l'espace de panneaux des données avec un statut de données d'utilisation ;
   - activation du widget du panneau correspondant dans l'espace de panneaux,
   - transmission des données d'utilisation du widget au namespace associé,
   - activation de l'objet d'interaction du namespace correspondant au widget de l'espace de panneaux,
   - envoi des données d'utilisation à l'application principale à partir du namespace,
   - traitement des données d'utilisation par l'application principale et passage d'un statut d'données d'utilisation à un statut de données traitées,
   - renvoi des données traitées à un namespace identique ou différent de celui ayant transmis les données d'utilisation depuis l'application principale dans un objet d'interaction,
   - envoi des données traitées depuis l'objet d'interaction d'un namespace à au moins un widget correspondant dans l'espace de panneaux,
   - envoi des données traitées depuis le au moins un widget de l'espace de panneaux vers au moins une application client.
- une étape entre de sélection de l'interface utilisateur dans l'espace de panneaux s'interpose entre l'étape de transmission au panneau correspondant dans l'espace de panneaux des données d'utilisation et l'étape d'activation du widget du panneau correspondant l'espace de panneaux.
- l'espace virtuel comprend plusieurs namespace une étape d'échange de données d'utilisation et/ou d'données traitées entre namespace est réalisée.
- procédé comprenant préalablement à l'étape d'activation d'un widget présent sur le panneau affiché sur l'appareil client, une étape de connexion à une session utilisateur.
- l'étape d'envoi des données traitées depuis l'objet d'interaction d'un namespace à au moins un widget correspondant dans l'espace de panneaux, comprend l'envoi des données traitées à plusieurs widgets correspondant.
- l'étape d'envoi des données traitées depuis le au moins un widget de l'espace de panneaux vers au moins une application client comprend l'envoi des données traitées à plusieurs applications clientes.
- L'application principale est codée selon un premier langage.
- Là au moins une application client est codée selon un deuxième langage.
- Le premier langage et le deuxième langage sont différents.
- Le premier et le deuxième langage sont identiques.
- L'application principale comprend au moins une partie graphique et une partie logique.
- La partie logique de l'application principale est hébergée sur au moins un serveur.
- L'appareil client est choisi parmi l'un des appareils suivants : un ordiphone, une tablette tactile, un ordinateur, un objet connecté tel qu'une montre, des lunettes, des vêtements, bracelets, etc.
- les données d'utilisation transmises à l'espace virtuel sont prises parmi les caractéristiques suivantes de l'écran : sa taille et/ou son nombre de pixels et/ou son ratio et/ou la présence ou non d'un dispositif de pointage intégré.
- Le premier langage est Java.
- Le deuxième langage est notamment pris parmi les langages suivants : Java, JavaScript, TypeScript (TS), Objective C, Swift, HTML, C, C++, C# / XAML, CSS.
- Un champ est un espace vide configuré pour être rempli par le logiciel ou par un utilisateur.
- Un tableau comprend des colonnes et des lignes, chacune des cases d'un tableau est considérée comme un champ.
- Une action permet l'activation d'une opération dans la partie logique et/ou graphique de l'application principale.
- L'application reste active dans l'espace virtuel lors de la déconnexion d'au moins une application cliente.
- L'application reste active dans l'espace virtuel lors de la déconnexion de toutes les applications clientes.
- L'espace virtuel est interposé entre la partie graphique et la partie logique.
- La partie graphique comprend l'espace virtuel et l'espace de panneaux.

Pour la compréhension de l'invention on entendra par :
- Widget : Élément de base de l'interface graphique d'un logiciel (fenêtre, barre d'outils, bouton poussoir, champs de remplissage par exemple).
- Champs : espace vide configurée pour être rempli par un objet tel que par notamment exemple du texte et/ou un lien et/ou une image..
- Le terme APP désigne dans la demande de brevet et notamment sur les dessins le terme application.
- Le terme UI désigne dans la demande de brevet et notamment sur les dessins l'Interface utilisateur.
- Le terme ID désigne les éléments d'identifications. Par exemple un nom d'utilisateur et un mot de passe pour un utilisateur, ou un numéro interne pour une application.
- Application : logiciel ou ensemble de logiciels destiné au traitement d'une tâche spécifique
- Plateforme : ensemble des caractéristiquesfu matériels etdes logiciels définissant un type d'appareil.
- Application multiplateforme : logiciel ou ensemble de logiciels destiné au traitement d'une tâche spécifique et pouvant fonctionner sur plusieurs plateformes, c'est-à-dire sur plusieurs types d'appareils.
- les au moins un widget des panneaux sont configurés pour être associé à l'un des au moins un objet d'interaction d'au moins un namespace afin de recevoir et envoyer des données audit namespace associé grâce à l'activation des widgets et/ou des objets d'interaction.

L'invention ci-dessous décrite permet le développement et le déploiement d'applications multiplateformes.

Cette invention met notamment en oeuvre un procédé de déploiement et de développement d'au moins une application principale 103. A l'issu de ce procédé, le déploiement de l'application principale 103 est plus rapide, un gain de temps est aussi opéré lors de futures mises à jour, et la sécurité des données est augmentée (stockage local des données utilisateur très limité).

L'invention comprend notamment un système permettant à une application principale 103 d'être accessible à une pluralité de plateformes à travers au moins une application client 201.

Avantageusement, l'invention va permettre à l'application principale 103 d'être accessible sur toutes les plateformes sans développement complémentaire. En effet, un développeur voulant mettre à disposition son application principale 103 sur un grand nombre de plateformes différentes ne code qu'une seule fois son application principale 103 dans le système. Ensuite, le système rend accessible ladite application principale 103 sur l'ensemble des plateformes. Il en sera de même pour toutes les mises à jour de l'application principale 103. La mise à jour de l'application principale 103 au sein du système sera alors accessible sur l'ensemble des plateformes.

Le système mis en oeuvre par l'invention comprend donc au moins un serveur 100 comprenant au moins une application principale 103 et au moins un appareil client 200 comprenant une application client 201. On appellera appareil client 200, tout type d'appareil sur lequel il est possible d'installer un logiciel et pouvant communiquer avec le serveur 100. La communication avec le serveur 100 peut se faire par tout type de moyens tel qu'un réseau filaire (Ethernet ou fibre optique par exemple), un réseau sans fil radiophonique (Wi-Fi® ou cellulaire comme la 4G par exemple) ou optique (Li-Fi par exemple). Généralement et avantageusement, la connexion au serveur 100 se fait au travers d'un réseau Internet.

Ainsi, les appareils client 200 peuvent être, des ordinateurs (fixes ou mobiles), des téléphones intelligents (Smartphone ou Ordiphone), des télévisions intelligentes ou des appareils de présentation intelligents, des tablettes tactiles (ardoise numérique), des lunettes connectées, des montres connectées ou tout autre type d'appareil permettant une connexion au réseau Internet et sur lequel une application client 201 peut être installée.

L'application client 201 quant à elle est une application codée en partie dans le langage natif de l'appareil client 200 et installée sur ledit appareil client 200. Cette application client 201 est de préférence codée et déployée. De plus, les langages utilisés pour coder l'application client 201 ne sont pas obligatoirement parmi ceux de l'application principale 103. Les buts et fonctionnements de l'application client 201 seront développés ci-après.

Avantageusement, le serveur 100 comprend au moins l'application principale 103, un espace de panneaux 110, un espace virtuel 120, et un sélecteur d'interfaces 102.

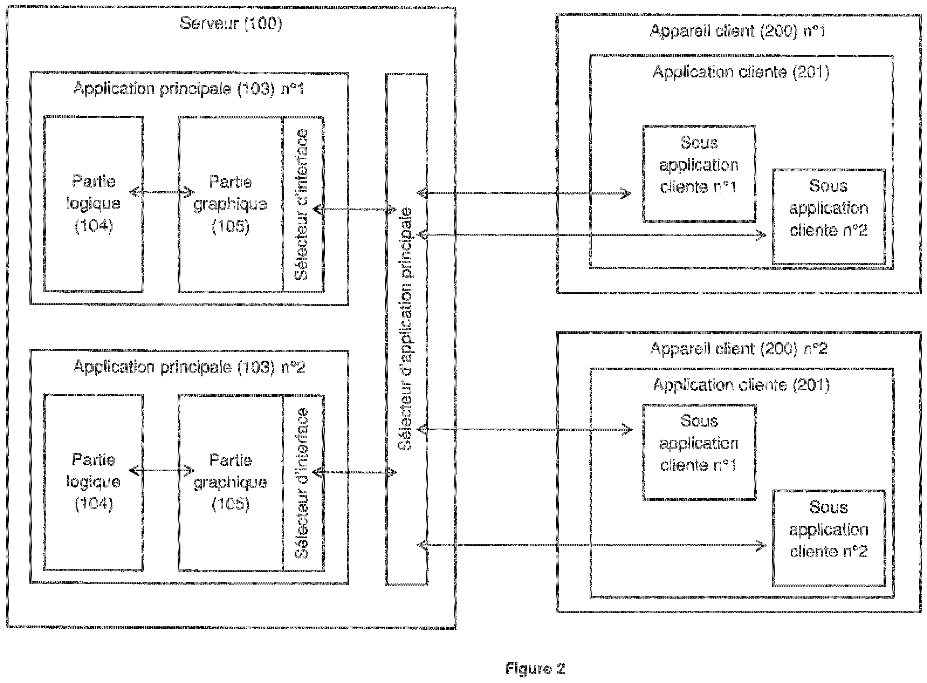

Dans une réalisation de l'invention (figure 2), le serveur 100 comprend plusieurs applications principales 103 et une seule application client 201 par appareil client 200. Dans cette réalisation optionnelle, l'application client 201 est sous-divisée en sous-applications clientes. Avantageusement, un sélecteur d'applications est alors présent pour déterminer, quelle application principale 103 doit être activée.

### L'application principale 103

Dans la réalisation préférée de l'invention, l'application principale 103 est l'application codée par le développeur. C'est l'application qui doit être ensuite accessible sur toutes les plateformes.

Avantageusement l'application principale 103 comprend une partie logique 104, une partie graphique 105 et un espace virtuel 120. De manière préférentielle, les parties logique 104 et graphique 105 de l'application principale 103 sont séparées. Avantageusement, la partie graphique 105 comprend l'espace de panneaux 110. Dans une réalisation non préférentielle, l'espace virtuel 120 est compris dans la partie graphique 105. La partie logique 104 quant à elle n'est de préférence pas présente dans l'espace de panneaux 110 et dans l'espace virtuel 120. Dans une réalisation alternative de l'invention, des éléments spécifiques de la partie logique 104 sont présents dans les espaces de panneaux 110 et virtuel 120.
La partie logique 104 comprend de préférence l'ensemble des processus permettant le traitement de données. C'est la partie du système dans laquelle est décrite l'ensemble des opérations que l'application principale 103 peut réaliser. Les différentes règles de gestion et de contrôle du système sont mises en oeuvre dans cette partie du système. La partie graphique 105 comprend l'ensemble des widgets 113. C'est-à-dire tous les éléments de base de l'interface utilisateur 111 de l'application. La partie graphique 105 comprend l'ensemble des liens entre les widgets 113 et la partie logique 104.

Avantageusement l'application principale 103 peut être répartie sur une pluralité de serveurs 100. Dans une autre réalisation, l'application principale 103 est hébergée sur un seul serveur 100.

De manière préférentielle, le serveur 100 comprend aussi une base de données. Cette base de données peut par exemple stocker l'ensemble des données nécessaires au fonctionnement de l'application, mais encore des données d'usage de l'application. Par exemple, les données d'usage peuvent être des données relatives aux connexions des applications, taux d'erreurs, etc. mais aussi des données servant à enrichir l'application principale 103. Par exemple, dans une application de recherche de restaurant, la base de données stockera les données de contact (lieu, e-mail, téléphone, etc.) des restaurants. Une autre réalisation de l'invention permet aussi à l'application principale 103 de récupérer des données sur des bases de données externes. Ainsi par exemple, toujours dans une application de recherche de restaurant, l'application principale 103 peut aller chercher sur la base de données d'un tiers les données sur la localisation de tel ou tel restaurant. Tous les exemples sont bien entendu non limitatifs.

Les données qui transitent entre l'appareil client 200 et le serveur 100 sont avantageusement sécurisées. La sécurisation de ces données passe aussi par un algorithme de sécurité précis comme SSL/TLS.

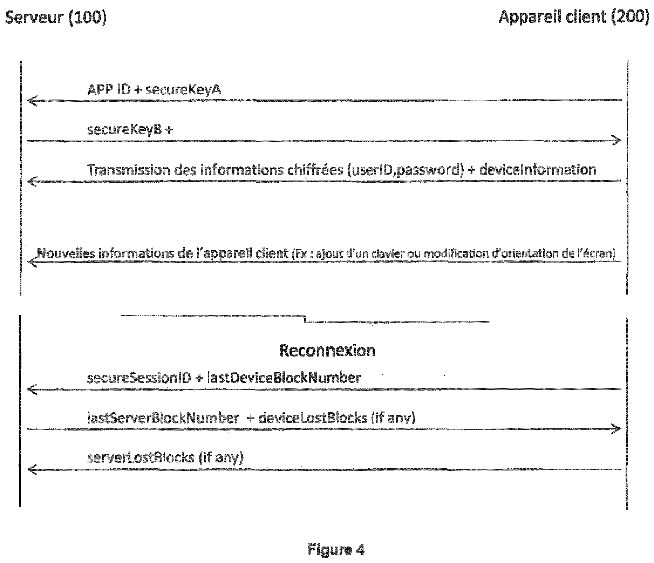

Comme illustré dans la figure 4, la logique de la sécurisation des données peut être la suivante :
- L'appareil client 200 envoie ses identifications (APP ID) ainsi qu'une clé de chiffrement A (secureKey A) ;
- Le serveur 100 répond en envoyant une clé de chiffrement B (secureKey B) ;
- Une fois cette double identification réalisée, l'appareil client 200 envoie au serveur 100 de manière chiffrée les identifiants de l'utilisateur (avantageusement nom d'utilisateur (userID) et mot de passe (password)) ainsi que les données d'utilisation 300 de l'appareil client 200 (deviceInformation) tel que par exemple, l'orientation de l'écran, son nombre de pixels, etc...

Ces différentes étapes permettent avantageusement à l'utilisateur de se connecter à une session d'utilisation. L'application principale 103 étant hébergée sur un serveur 100, plusieurs personnes peuvent l'utiliser de concert. Ainsi, une authentification de l'appareil client 200 et de l'utilisateur auprès du serveur 100 permet l'utilisation simultanée de plusieurs applications clientes 201 simultanément avec l'application principale 103.

De plus, une application client 201 peut être présente pour plusieurs applications principales 103. L'identification de l'application client 201 utilisée auprès du serveur 100 est donc une étape importante pour le bon fonctionnement du système.

Une fois que cette authentification est réalisée, l'appareil client 200 peut transmettre, de manière chiffrée et authentifiée, l'ensemble des nouvelles données que l'appareil client 200 ou qu'un autre appareil client 200 peut transmettre. En cas de nouvelles connexions d'un nouvel appareil client 200, une authentification de cet appareil client 200 sera bien entendu réalisée.

En cas de déconnexion d'un appareil lors d'une session, la seconde ouverture suit avantageusement les étapes suivantes, toujours selon la figure 4 :
- L'appareil client 200 renvoie les identifiants utilisés lors de la session précédente de manière chiffrée (secureSessionID), ainsi que le dernier paquet de données envoyées par l'appareil client 200 (IastDeviceBlockNumber). Il est entendu que les données voyagent comme dans tout logiciel par paquet.
- En réponse, le serveur 100 envoie le dernier paquet de données qu'il a émis (lastServerBlockNumber) à l'appareil client 200, ainsi que les paquets manquants s'il y en a (deviceLostBlocks (if any)),
- Avec ces nouvelles données, l'appareil client 200 peut renvoyer, s'il y en a, les paquets manquants transmis au serveur 100 (serverLostBlocks (if any)).

L'ensemble de ces étapes permet de récupérer une session coupée. Cette récupération se fait sans perte des données déjà transmises avec un haut niveau de sécurisation.

### L'espace de panneaux 110

L'application principale 103 comprend un module virtuel de stockage des interfaces graphiques désigné espace de panneaux 120. Le module est caractérisé de virtuel, car il est présent dans l'application principale 103. L'espace de panneaux 110 est hébergé de préférence sur le même serveur 100 que l'application principale 103. Dans une réalisation alternative, l'espace virtuel 120 est hébergé sur un serveur 100 différent de celui hébergeant l'application principale 103. L'espace de panneaux 110 comprend notamment au moins une interface utilisateur 111 (UI) et de préférence une pluralité d'interface utilisateur 111. Ces interfaces utilisateur sont ensuite transmises aux appareils client pour être affichées. La correspondance entre un appareil client 200 et l'interface utilisateur 111 dédiée à afficher est réalisée par un sélecteur d'interfaces 102 (décrit plus bas dans la description).

Avantageusement, il y a autant d'interfaces utilisateur que de type d'appareils client 200 différents. Autrement dit, pour chaque type d'appareils client 200 différents, une interface utilisateur 111 spécifique est créée et stockée dans l'espace de panneaux 110. Afin d'avoir une interface utilisateur 111s parfaitement adaptée aux caractéristiques des appareils client 200, chacune des interfaces utilisateur 111 prend en considération lesdites caractéristiques des appareils client. Elles prennent notamment en compte : les fonctionnalités, l'orientation, le thème de l'interface utilisateur de l'appareil de client 200, la taille de l'écran, le type d'appareil et le système d'exploitation de l'appareil. On voit que le nombre d'interfaces utilisateur 111 stocké dans l'espace de panneaux 110 peut être très important. Par exemple une interface utilisateur 111 différente doit être utilisée pour un ordiphone fonctionnant sous Android avec un écran de 6 pouces et un ordiphone fonctionnant sous Android et avec écran de moins de 4 pouces.

Avantageusement, chacune des interfaces utilisateur 111 comprend en plus une pluralité de panneaux 112. De préférence, l'appareil client 200 affichera un seul panneau 112 à la fois. Ainsi, un panneau 112 correspond à ce qu'un utilisateur final observe sur l'écran de son appareil client 200.

Chacun des panneaux 112 intègre au moins un widget 113. De préférence chacun des panneaux comprend plusieurs widgets 113.

Un widget 113 peut notamment correspondre à un bouton d'action. Il peut aussi correspondre à un champ et/ou un tableau. Il est entendu qu'un tableau est une succession organisée de champs.
Avantageusement, un bouton d'action est associé à une action. De plus, une action permet notamment l'activation d'une opération dans la partie logique 104 et/ou graphique 105 de l'application principale 103. Cette opération peut par exemple être la recherche d'une donnée, l'affichage d'un panneau 112 différent (grâce par exemple à un bouton « retour »), la sélection d'un champ, etc.

En fonction des actions de l'utilisateur final, et/ou des possibilités offertes par l'application principale 103, plusieurs panneaux 112 sont nécessaires pour afficher toutes les données et/ou widgets 113. Ainsi, par exemple dans une application de gestion de comptes bancaires, l'accueil de l'application correspond à un premier panneau 112 intégrant par exemple deux widgets 113 correspondant à deux champs permettant de renseigner l'identifiant et le mot de passe du compte, et un troisième widget 113 correspondant à un bouton d'activation pour envoyer les données rentrées et accéder aux comptes. La synthèse des comptes dans cet exemple correspond à un deuxième panneau 112, la recherche d'une opération à un troisième panneau 112, et l'affichage du résultat de la recherche d'une opération à un quatrième panneau 112. D'autres panneaux 112 sont bien entendu possibles et complémentaires.

De plus, nous avons dit que plusieurs interfaces utilisateur 111 étaient présentes pour une application principale 103. Chacune des interfaces utilisateur 111 a un nombre de panneaux 112 qui lui est propre. De même, le contenu de chaque panneau 112 est aussi indépendant (nombre de widgets 113, type de widgets 113, etc.). Bien entendu, lors de la création de l'application principale 103, on peut développer un panneau 112 unique pour l'ensemble des interfaces utilisateur 111. Néanmoins, dans une telle solution, le résultat ne serait pas parfaitement adapté à toutes les configurations d'appareils client 200.

Il est en effet aisé de comprendre l'intérêt d'une spécialisation de chacune des interfaces utilisateur 111. En effet, en fonction des caractéristiques de l'appareil client 200, le nombre d'données affichées sur l'écran, ou encore les fonctionnalités de l'appareil peuvent par exemple être différentes. Le fait d'avoir un bouton d'action pour prendre une photographie n'a aucun sens dans une interface utilisateur 111 affichée sur un appareil client 200 ne disposant pas d'appareil photographique. Il en va de même pour le nombre d'éléments qu'il est possible d'afficher sur un appareil client 200. Ce nombre dépend directement de la taille de l'écran. Il est évident que le nombre de widgets 113 pouvant être d'affiché sur un écran de 2m (mètre) de diagonale (écran de téléviseur par exemple) n'est pas le même que pour un écran de 3 cm (centimètre) de diagonale (écran de montre par exemple). Bien entendu, dans la réalisation où toutes les interfaces utilisateur 111 comprennent des panneaux identiques 112, une mise à l'échelle des différents widgets 113/panneaux 112 peut être réalisée pour s'adapter aux caractéristiques des écrans des appareils client 200.

### L'espace virtuel 120

L'application principale 103 comprend un module virtuel de gestion des interfaces graphiques désigné espace virtuel 120. Le module est caractérisé de virtuel, car il est présent dans l'application principale 103. L'espace virtuel 120 est aussi hébergé sur le serveur 100. Avantageusement, l'espace virtuel 120 est hébergé sur le même serveur 100 qui héberge l'espace de panneaux 110. D'autres configurations sont bien entendu possibles. Dans une réalisation alternative, l'application principale 103 ne comprend pas d'espace virtuel 120. L'espace virtuel 120 n'est pas essentiel au fonctionnement de l'invention.

L'espace virtuel 120 permet le lien entre la partie logique 104 et l'espace de panneaux 110. L'espace virtuel 120 permet aussi le lien entre les différentes interfaces utilisateur de l'espace de panneaux 110, et plus précisément entre les différents panneaux 112 au sein d'une même interface utilisateur 111 ou non.

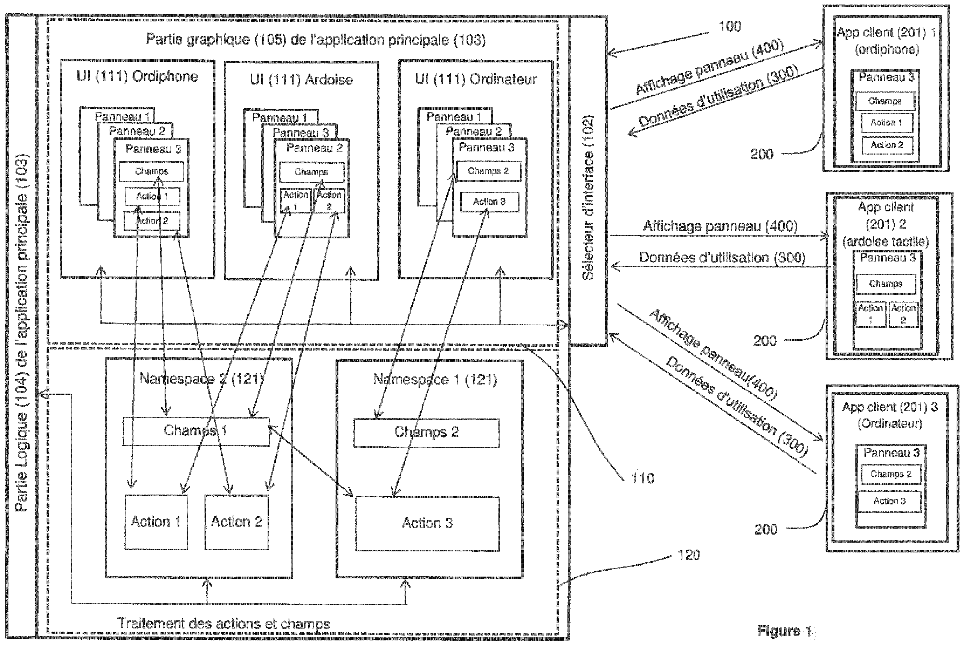

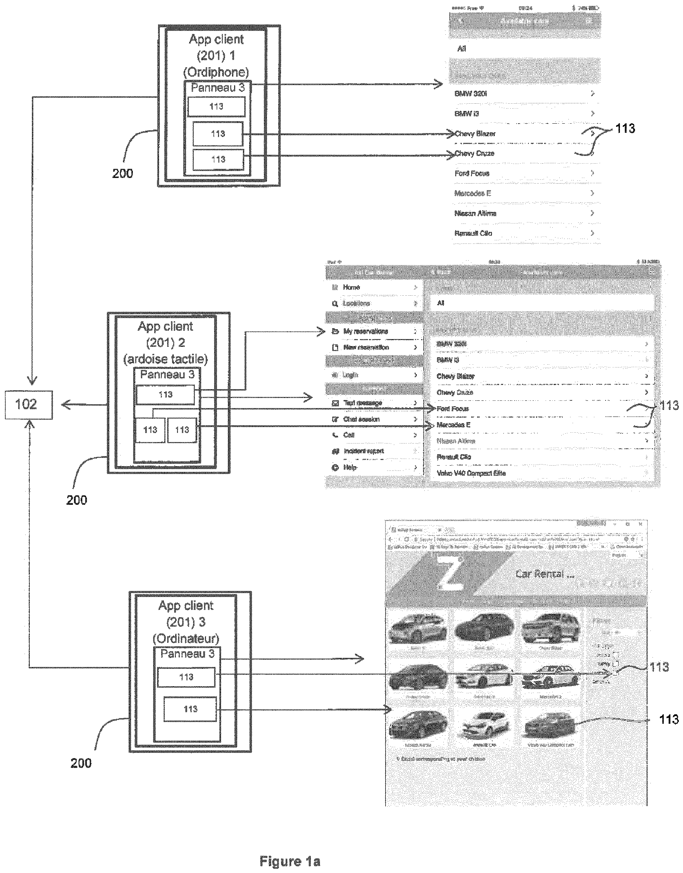

L'espace virtuel 120 comprend avantageusement au moins un « namespace » 121 (NS). Un namespace 121 peut être associé à plusieurs panneaux de l'espace de panneaux 110. De préférence, plusieurs namespaces 121 ne peuvent pas être associés à un seul panneau 112. Comme nous l'avons dit précédemment, ces panneaux 112 peuvent être ou non issus d'une même interface utilisateur 111. Un namespace 121 comprend au moins un objet d'interaction 122. Un objet d'interaction 122 peut notamment être un champ de remplissage et/ou un tableau et/ou une action. Avantageusement, l'espace virtuel 120 ne comprend uniquement ces trois types d'objet d'interactions 122. Avantageusement, chaque objet d'interaction 122 correspond à au moins un widget 113 présent dans l'espace de panneaux 110. La figure 1a montre un de widget 113 lors de l'utilisation de l'invention. Inversement, tous les widgets 113 présents dans les panneaux 112 correspondent à au moins un objet d'interaction 122 dans l'espace virtuel 120. De plus, les objets d'interaction 122 d'un namespace 121 peuvent communiquer d'une part avec d'autres objets d'interactions 122 d'un même ou d'un autre namespace 121 et d'autre part avec un la partie logique 104 de l'application principale 103.
Autrement dit, les namespaces 121, et leurs objets d'interaction 122, sont le dénominateur commun entre tous les panneaux 112 des interfaces utilisateur 111 mais aussi entre les widgets 113 et la partie logique 104 de l'application principale 103.

Ainsi, l'activation d'une action dans un widget 113, active un objet d'interaction 122. L'objet d'interaction 122 activé va d'une part transmettre l'information de cette activation pour traitement à la partie logique 104 de l'application principale 103, et d'autre part renvoyer l'information de cette activation à tous les widgets 113 des autres panneaux 112 associés à cet objet d'interaction 122. Au final, l'activation d'un widget 113 dans un panneau 112 donné correspond virtuellement à l'activation de tous les widgets 113 similaires présents dans les autres panneaux 112.

Le namespace 121, sert donc aussi à synchroniser l'ensemble des panneaux 112 afin qu'ils affichent tous une information commune.

Plus généralement, l'espace virtuel 120 permet de conserver en activité l'ensemble de l'application. Ainsi, même lorsque toutes les applications clientes sont déconnectées, l'application est toujours en activité dans l'espace virtuel 120. Peu important le nombre de sessions clientes, l'ensemble est stocké dans l'espace virtuel 120. Autrement dit, une application est toujours en activité dans l'espace virtuel 120, et de préférence dans la mémoire RAM du serveur.

En conservant active l'application dans l'espace virtuel 120 et notamment au travers des différents namespaces 121, cela permet une synchronisation parfaite entre les différentes applications cliente 201 en temps réel, mais aussi la reprise de l'ensemble d'une activité sur l'application cliente 201 même après une coupure.
Ces éléments diffèrent fondamentalement de l'art antérieur notamment en ce que l'application, reste active dans un espace virtuel 120 ce qui n'est pas le cas dans l'art antérieur comme par exemple dans US2006/179118. Dans cet art antérieur comme dans l'ensemble des autres arts antérieurs, l'espace de panneaux 110 et l'espace virtuel 120 sont fusionnés et comprennent un sélecteur d'interface afin de préciser l'interface à utiliser en fonction de l'application cliente 201. Cependant, l'invention décrite ici est foncièrement différente en ce que l'espace de panneau 110 et l'espace virtuel 120 sont dissociés. Cela permet l'utilisation simultanée, sur une même application de plusieurs applications cliente 201. D'autres arts antérieurs, comme par exemple le remplissage d'un formulaire sur un site internet ne peuvent pas garder en mémoire l'ensemble des sessions des applications clientes 201 actives. Ainsi, en cas de coupure de la connexion, les formulaires doivent être re-remplis, ou si ce n'est pas le cas car un cache existe en local, aucune synchronisation entre les différentes applications clientes n'est possible.
L'espace virtuel 120 permettant de conserver l'activation de l'application même sans application cliente 201 connectés, et étant de préférence séparée virtuellement de la partie graphique 105 de l'application principale 103 est inédit et permet une facilité d'utilisation de l'application principale 103 sur les applications clientes 201.
Dans la figure 1a qui divulgue un exemple de différents panneaux 111 comprend des widgets 113, désigné spécifiquement dans la figure par des modèles de voitures. Ce type de widgets associés à des modèles de voitures est bien entendu pas limitatif, et doivent être interprétés uniquement comme un exemple.
Dans cette figure 1a, c'est l'espace virtuel 120 qui permet la synchronisation de toutes les actions entre les différentes interfaces. Ainsi, par exemple, si l'on sélectionne le champ 2 de l'interface sur ordinateur pour effectuer un tri des voitures, alors ce tri s'applique à tous les panneaux 111, même si pour certains panneaux 111, l'option de ce tri n'était pas disponible. Cela est possible grâce à l'espace virtuel 120 et à la correspondance dans l'espace virtuel 120 faite entre les widgets 113 et les objets d'interactions 122 des namespaces 121.
Contrairement à l'art antérieur, dans lequel les interactions des utilisateurs sur l'application cliente, appelée « événement » et rattaché à un morceau de code spécifique, déclenche l'application dudit code dans la partie logique 104. Cela nécessite alors, dans l'art antérieure une très grande diversité de widget 113 et une volatilité du morceau de code rattaché à l'évènement. En effet, chaque widget 113 présent dans l'application cliente 201 doit avoir son propre développement et donc son propre code. Ainsi, en cas de perte de connexion avec l'application cliente 201, le code disparait car il est stocké uniquement dans la partie graphique 105 de l'application cliente. Il est donc extrêmement volatile.
Dans l'invention, les évènements sont rattachés à un morceau de code dans l'espace virtuel 120, et donc uniquement dans un des types d'objets d'interaction 122 présents dans l'espace virtuel 120. Avantageusement, l'espace virtuel 120 agit comme un dénominateur commun entre toutes les applications clientes 201 et la partie logique 104. Ainsi, tous les évènements sont stockés dans l'espace virtuel 120 et indépendant de l'application cliente et de sa connexion avec l'application principale 103. Cela permet de facilité le développement des applications clientes 201, de rendre compatible un plus grand nombre d'appareils clients 200 et de conserver le morceau de code lié à l'événement en cas de coupure de connexion entre l'application principale 103 et l'application cliente 201.

Avantageusement, et en combinaison avec n'importe laquelle des réalisations, un code rattaché à un événement, c'est à dire à une action faite par un utilisateur sur l'application cliente, est stocké de manière non volatile, c'est-à-dire qu'il ne disparait pas en cas de coupure de connexion entre l'application cliente 201 et la partie logique 104.

L'activation d'un objet d'interaction 122 dans un namespace 121 peut notamment envoyer une donnée pour traitement à la partie logique 104 de l'application principale 103, modifier le panneau 112 à afficher (étape d'affichage d'un panneau 400) dans l'interface utilisateur 111, créer un namespace 121 provisoire pour afficher les données issues du traitement par la partie logique 104 de l'application principale 103.

Avantageusement, lorsqu'un namespace 121 est sélectionné, et plus précisément un objet d'interaction 122 dans le namespace 121, on parle de focus du namespace 121. Le terme focus voulant avantageusement dire focalisation. Ainsi, l'application logique va interagir avec un objet d'interaction 112 focalisé dans le namespace 121.

### Le sélecteur d'interface 102

La sélection de la version d'interface utilisateur 111 correspondant à l'appareil client 200 est réalisée par le sélecteur d'interface 102 en fonction d'données d'utilisation 300 (deviceInformation). Les données d'utilisation 300 comprennent des données matérielles (par exemple taille de l'écran), logicielles (par exemple système d'exploitation) et d'usage (par exemple la sélection réalisée par l'utilisateur). Les données d'utilisation 300 sont transmises au sélecteur d'interfaces 102 par l'application client 201. Avantageusement, les données d'utilisation 300 transmises au sélecteur d'interface 102 sont prises notamment parmi les caractéristiques suivantes de l'appareil client 200 sur lequel est installée l'application client 201 : les fonctionnalités, l'orientation, le thème de l'interface utilisateur de l'appareil client 200, la taille de l'écran, le type d'appareil et le système d'exploitation de l'appareil.
Ainsi, les fonctionnalités de l'appareil comprennent notamment la présence : d'une batterie et le cas échéant du statut de la batterie, d'un dispositif permettant l'enregistrement de vidéographie et/ou de photographie tel qu'un appareil de photographie ou une caméra, d'un carnet de contact, d'une boussole, d'un GPS, d'un dispositif de capture du son tel qu'un microphone, d'un dispositif de capteur de mouvement tel qu'un accéléromètre ou un gyroscope, d'un dispositif de pointage externe tel qu'une souris ou un stylet, d'un dispositif de pointage interne tel qu'un écran tactile, d'un lecteur multimédia permettant notamment la lecture de son et/ou de vidéographie, d'un dispositif permettant d'émettre des sons tel qu'un haut-parleur, d'antenne permettant l'émission et la réception d'ondes telles que des ondes radio ou téléphoniques, d'un système de reconnaissance vocale, ou encore la présence d'un lecteur d'empreinte digitale, etc. Cette liste de fonctionnalité est une liste non exhaustive et d'autres fonctionnalités peuvent être présentes dans un appareil.

Les données d'orientations de l'appareil comprennent avantageusement la position de l'appareil (paysage ou portrait).

Le thème de l'interface comprend notamment la présence d'éléments en 3D (comme par exemple pour iOS® 4 à 6, Mac OSX® ou encore Windows 7® et suivants), la présence de thème lumineux (pour iOS® par exemple) ou encore la présence de thème sombre (Android® ou Windows Phone®), la présence de flat design (comme par exemple pour iOS 7 et suivants, Android 4 et suivants, Windows Phone, Windows 8 et suivants), etc.

Le type d'appareil est avantageusement pris parmi les appareils suivants : desktop (ordinateur de bureau stationnaire), laptop (ordinateur portable), lunettes, très petit appareil (par exemple les montres connectées), téléphone (ordiphone de préférence), appareil de présentation (projecteur ou télévision par exemple), ardoise tactile (ou tablette tactile). L'identification du type de l'appareil peut être réalisée grâce à une analyse du numéro de série, ou des capacités de l'écran comme la taille, le ratio, le nombre de pixels, la présence ou non d'un appareil de pointage intégré (écran tactile), le système d'exploitation, etc.

Le système d'exploitation de l'appareil est notamment l'un des systèmes d'exploitations suivants : Android (ardoise tactile et ordiphone), Blackberry OS, Windows, Navigateur web de bureau (Chrome, Safari, Opéra, Internet Explorer, Edge, Mozilla Firefox, etc.), iOS (ardoise tactile ou ordiphone).

Enfin les données concernant la taille des écrans sont de préférence regroupées en espaces de valeurs. Ainsi, on a par exemple, les mini-ardoises tactiles (taille entre 7 et 9 pouces), les grands ordiphones (à partir de 6 pouces), les ordiphones normaux (entre 4 et 6 pouces), les petits ordiphones (moins de 4 pouces), les ardoises tactiles (à partir de 9 pouces).

D'autres données peuvent notamment être utilisées comme par exemple la langue de l'appareil client 200 ou encore la situation géographique de l'appareil client 200. En fonction de ces éléments, une interface utilisateur 111 pourra afficher ou non certains contenus (par exemple limitation d'affichage de contenu de nudité pour les pays arabes). L'application principale 103 peut donc très facilement s'adapter à toutes les législations locales.

De plus, pour les langues arabes et/ou asiatiques, le sens de lecture peut être différent. Cela nécessite affichage les interfaces utilisateur 111 de différente manière afin de facilité l'utilisation de l'application principale 103.

Le sélecteur d'interface peut aussi par exemple 102 collecter des données sur la présence ou non d'un contrôle parental. On comprend ici, que les interfaces utilisateur 111 masqueront alors du contenu violent et/ou pornographique par exemple.

Un sélecteur d'interface 102 peut bien entendu se baser sur l'une ou sur l'ensemble ou sur une sélection de ces données. Enfin, d'autres données peuvent avantageusement être utilisées pour sélectionner une interface utilisateur 111.

Dans une réalisation préférée de l'invention, les données entre l'application principale 103 et l'application client 201 passent toujours au travers du sélecteur d'interfaces 102 avant d'être affichées dans l'application client 201. Dans une réalisation alternative de l'invention, les données issues de l'application client 201 passent par le sélecteur d'interfaces 102 avant de correspondre à une interface utilisateur 111, mais les données issues de l'application principale 103 vers l'application client 201 sont directement transmises par les interfaces utilisateur 111 sans passer par le sélecteur d'interface 102.

Le sélecteur d'interfaces 102 a notamment pour objectif de faire correspondre un widget 113 de l'application client 201 avec le widget 113 correspondant de l'interface utilisateur 111 stocké dans l'espace de panneaux 110.

### L'application client 201

L'application client 201 s'installe sur l'appareil client 200. Avantageusement, le codage et l'installation de l'application client 201 sont réalisés en amont du codage de l'application principale 103. Qui plus est, l'application client 201 n'est avantageusement codée qu'une seule fois, et ce peu importe le nombre d'applications principales ensuite déployées.

Avantageusement, l'application client 201 permet l'affichage de l'interface utilisateur 111 de l'application principale 103 de manière déportée sur au moins un appareil client 200. Dans une réalisation spécifique de l'invention, l'application client 201 comprend une pluralité de sous-applications correspondant à plusieurs applications principales. Ainsi, par exemple, à l'ouverture de l'application client 201, une sélection de l'application principale 103 est à réaliser par l'utilisateur.

Avantageusement l'application client 201 est codée dans un langage pris parmi les langages suivants : Java, JavaScript, TypeScript (TS), Objective C, Swift, HTML, C, C++, C# / XAML, CSS. La sélection du langage du code de l'application client 201 dépend directement de l'appareil client 200 sur lequel doit être installée ladite application client 201. Le langage de l'application client 201 peut être ou ne pas être un langage similaire à celui de l'application principale 103.

Dans une autre réalisation de l'invention, l'application client 201 est un navigateur web tel que Chrome, Safari, Opéra, Internet Explorer, Edge, Mozilla Firefox, Safari Mobile etc.

### Utilisation du système

Maintenant que nous avons décrit l'ensemble des éléments du système, nous allons décrire le fonctionnement dudit système et notamment le déploiement d'une application principale 103 ainsi que son utilisation.

### Le déploiement d'une application principale 103

Lors du développement d'une application principale 103, les applications clientes 201 sont avantageusement déjà créées et préinstallées sur les appareils client. Le développeur va coder uniquement son application principale 103 sur un serveur 100 dans un langage de programmation compatible avec le serveur 100. Avantageusement, le langage utilisé pour coder l'application principale 103 est le langage Java® et/ou JavaScript. Lors du développement de l'application, le développeur va séparer la partie logique 104 et la partie graphique 105 de l'application. Dans la partie graphique 105, il va falloir créer une pluralité de panneaux 112 reprenant l'ensemble des widgets 113 disponibles et nécessaires à l'utilisation de l'invention. Les panneaux 112 sont ensuite regroupés en interfaces utilisateur 111. Chacune des interfaces utilisateur 111 est ensuite associée à un ensemble de données d'utilisation 300.

Le développeur va aussi créer un espace virtuel séparé de la partie logique 104 et de la partie graphique 103. Cet espace virtuel va être complété avec un ou plusieurs namespace 121. Lors de la création d'un namespace 121, le développeur devra créer un ou plusieurs objets d'interaction 122 et le ou les associer, soit à un widget 113, soit à un autre objet d'interaction 122. De plus, l'objet d'interaction 122 pourra être associé à un traitement dans la partie logique 104 de l'application principale 103.

Avantageusement, lors de la première ouverture de l'application client 201, cette dernière va transmettre les données d'utilisation 300 de l'appareil client 200 au sélecteur d'interface 102. Ces données peuvent aussi être transmises lors des échanges entre l'application client 201 et l'application principale 103. En fonction des données d'utilisation 300 reçues, le sélecteur d'interface 102 va faire correspondre une interface d'utilisateur 111 avec l'appareil client 200. Avantageusement, une copie du premier panneau 112 de l'interface utilisateur 111 sélectionnée est ensuite envoyée à l'appareil client 200 (par le sélecteur d'interface 102 ou directement par l'espace de panneaux 110). Ainsi, à chaque moment « T », il y a une synchronisation entre le panneau 112 sélectionné dans une interface utilisateur 111 et ce qui est affiché dans l'application client 201 de l'appareil client 200.

### Utilisation de l'application

L'activation d'un widget 113 dans l'application client 201, active automatiquement le widget 113 correspondant dans l'interface utilisateur 111. Cette activation est permise par l'envoi des données d'utilisation 300 nécessaires au sélecteur d'interface 102 qui ensuite fait correspondre le widget 113 affiché à l'écran et le widget 113 présent dans une interface utilisateur 111.
L'activation d'un widget 113 dans l'espace de panneaux 110 active automatiquement l'objet d'interaction 122 associé dans un namespace 121 de l'espace virtuel 120. L'activation de l'objet d'interaction 122 associé a plusieurs conséquences en fonction de l'objet d'interaction 122 et des actions associées. Cela peut entrainer un traitement dans l'application logique 104 et/ou la sélection d'un autre objet d'interaction 122 et/ou la création d'un namespace 121 spécifique. D'autre part, si d'autres widgets 113 sont associés à l'objet d'interaction 122 associé, alors ils sont virtuellement considérés comme activés. Le résultat de l'activation d'un objet d'interaction 122 est ensuite retransmis à l'ensemble des widgets 113 associés à cet objet. L'ensemble de ces widgets 113 va ensuite s'afficher dans les applications clientes 103 qui lui sont associés. Bien entendu, une fois activé, l'application reste active dans l'espace virtuel 120, même s'il n'y a plus d'applications clientes 201 connectées.

Pour illustrer notre propos, nous allons prendre l'exemple d'utilisation d'une application principale 103 de gestion de compte bancaire. Bien entendu, l'invention n'est pas limitée à l'utilisation d'une telle application. Qui plus est dans notre exemple, trois appareils client 200 sont connectés à une même session. Les appareils client 200 sont avantageusement un ordiphone, une tablette tactile et un ordinateur portable. L'utilisateur accède à l'application client 201 depuis son ordiphone. L'information de l'ouverture de l'application client 201 est transmise au sélecteur d'interface 102 avec les données d'utilisation 300 de l'ordiphone. Le sélecteur d'interface 102, grâce aux données à sa disposition fait correspondre une interface utilisateur 111 avec l'appareil. Une fois l'interface utilisateur 111 sélectionnée, cette dernière sélectionne le premier panneau 112 à afficher. Cette sélection de panneaux 112 active un objet d'interaction 122 dans un namespace 121 associé. La sélection d'un objet d'interaction 122 se transmet ainsi à toute les interfaces utilisateur 111, afin qu'elles sélectionnent toutes leurs premiers panneaux 112. L'ensemble de ces panneaux 112 sont transmis au sélecteur d'interface 102 qui les distribue aux appareils client 200 associés.

Le premier panneau 112 affiche avantageusement trois widgets 113 (deux champs à remplir correspondant aux identifiants et mots de passe, et un bouton d'action d'envoi des données). Lorsque l'utilisateur remplit un widget 113 sur son ordiphone, ces données sont transmises de préférence en temps réel au sélecteur d'interface 102. Ce dernier retransmet ces données à l'interface utilisateur 111 correspondante dans l'espace de panneaux 110. Cette interface transmettant ensuite les données à l'objet d'interaction 122 du namespace 121 qui les retransmet à l'ensemble des widgets 113 associés dans les différentes interfaces utilisateur 111. Les interfaces utilisateur 111 s'affichant ainsi sur les appareils client 200 connectés grâce au sélecteur d'interface 102. Ainsi, le remplissage d'un champ sur l'ordiphone se répercute en temps réel sur la tablette tactile et sur l'ordinateur portable.

Toutes les actions suivantes reprennent sensiblement les mêmes étapes. Certaines différences peuvent cependant apparaitre, comme notamment le traitement de données dans la partie logique 104 de l'application principale 103 ou la création d'un namespace 121 pour afficher un résultat de traitement par l'application principale 103.
Pour certaines actions spécifiques, le traitement de l'action est directement réalisé entre l'interface utilisateur 111 et l'application client 201. C'est notamment le cas pour la prise d'une photographie. L'action étant réalisée sur l'appareil client 200, il n'y pas de traitement dans le namespace 121.

La synchronisation de l'ensemble des interfaces utilisateur 111 sur les appareils client 200 est un point particulièrement important de l'invention. En effet, l'application principale 103 reste active et un même utilisateur peut changer sans incidence d'appareils client 200. Cela est notamment possible grâce au « focus » du namespace 121 et plus généralement grâce au fait que l'application reste active dans l'espace virtuel 120. Cette fonction, pouvant notamment s'appeler « Follow-Me » permet de rendre universelle l'application principale tant dans son développement, que dans son utilisation. Qui plus est, cette fonction permet aussi par exemple de changer de langue sans difficulté. En effet, la sélection d'un widget 113 d'une interface 111 permet l'activation, selon le procédé décrit plus en amont, de l'ensemble des widgets 113 correspondant sur les autres interfaces utilisateur 111, et donc son affichage sur l'ensemble des appareils client 200. Ainsi, la sélection d'un widget 113 dans une langue spécifique apparait aussi sur les interfaces utilisateur 111 affichant d'autres langues. Une des utilisations peut donc un travail simplifié entre plusieurs collaborateurs connectés à une même session utilisateur.

L'invention n'est pas limitée aux modes de réalisation précédemment décrits mais s'étend à tous modes de réalisation inclus dans l'étendue de la protection selon les revendications indépendantes.

### Référence

- 100.: Serveur
- 102.: Sélecteur d'interface
- 103.: Application principale
- 104.: Partie logique
- 105.: Partie graphique
- 110.: Espace de panneaux
- 111.: Interface utilisateur
- 112.: Panneaux
- 113.: Widget
- 120.: Espace virtuel
- 121.: Namespace
- 122.: Objet d'interaction
- 200.: Appareil client
- 201.: Application client
- 300.: données d'utilisation
- 400.: Affichage d'un panneau

## Revendications

1. Système permettant la création et le déploiement d'applications sur plusieurs types d'appareils client (200), comprenant une pluralité d'appareils client (200) de différent types hébergeant chacun au moins une application client (201) et un serveur (100) en communication avec ladite pluralité d'appareils client (200) hébergeant au moins une application principale (103), ladite application principale (103) comprenant au moins une partie logique (104), une partie graphique (105) et un sélecteur d'interface (102),
ladite partie graphique (105) comprenant un module virtuel de stockage d'une pluralité d'interfaces utilisateur (111) désigné espaces de panneaux (110) et un module virtuel de gestion des interfaces graphiques désigné espace virtuel (120), ledit sélecteur d'interface (102) étant configuré de manière à faire correspondre un type d'interface utilisateur (111) à chaque type d'appareil client (200), ledit espace virtuel (120) :
- comprend au moins un module de communication de données, désigné namespace (121), ledit namespace comprenant au moins un objet d'interaction (122) tel qu'un champ de remplissage et/ou un tableau et/ou une action ;
- est configuré pour permettre la communication entre la partie logique (104) de l'application principale (103) et la partie graphique (105) ; et
- est configuré pour stocker en permanence l'état d'activation de l'application principale (103) suite à des modifications ordonnées par au moins l'une des applications clientes (201),
le système étant configuré de manière à ce que chacune des interfaces utilisateur (111) comprend plusieurs panneaux, chacun des panneaux comprend au moins un widget (113), et dans lequel l'au moins un widget (113) de chaque panneau est associé à l'un des au moins un objet d'interaction (122) d'au moins un namespace (121) afin de recevoir et envoyer des données audit namespace (121) associé grâce à l'activation des widgets (113) et/ou des objets d'interaction (122), les applications clientes étant de préférence configurées pour afficher un seul panneau à la fois, chacun des appareils client (200) de la pluralité d'appareils client (200) étant configuré pour être connecté à une session utilisateur unique, le système étant configuré de manière à effectuer au moins les étapes suivantes en réponse à une activation l'au moins une l'application client (201), ces étapes étant exécutées par au moins un microprocesseur :
- recevoir depuis l'appareil client (200) au travers du sélecteur d'interface (102) des données correspondant à l'activation d'un widget présent sur le panneau affiché sur l'appareil client,
- transmettre lesdites données avec un statut de données d'utilisation (300) au panneau (112) correspondant de l'espace de panneaux (110),
- activer le widget (113) du panneau (112) correspondant dans l'espace de panneaux (110),
- transmettre depuis ledit panneau (112) lesdites données d'utilisation (300) au namespace (121) associé dans l'espace virtuel (120)
- activer l'objet d'interaction (122) du namespace (121) correspondant audit widget (113) de l'espace de panneau (110),
- envoyer depuis l'espace virtuel (120), en particulier depuis le namespace (121) les données d'utilisation (300) à la partie logique (104), en particulier à l'application principale (103),
- traiter les données d'utilisation (300) par la partie logique (104) et passer lesdites données d'utilisation (300) d'un statut de données d'utilisation (300) à un statut de données traitées,
- renvoyer les données traitées à un namespace (121) identique ou différent de celui ayant transmis les données d'utilisation (300) depuis l'application principale (103) en particulier depuis la partie logique (104) à un objet d'interaction (122),
- transmettre les données traitées depuis l'espace virtuel (120) et en particulier depuis l'objet d'interaction (122) d'un namespace (121) à au moins un widget (113) correspondant dans l'espace de panneaux (110),
transmettre depuis le au moins un widget (113) de l'espace de panneaux (110) les données traitées aux applications clientes de la pluralité d'appareils clients (201), chaque modification sur l'une des interfaces utilisateur (111) étant répercutée par conséquent sur les autres interfaces utilisateur (111) affichées sur les différents appareils client (200).

2. Système selon la revendication précédente, configuré de manière à ce que la sélection de l'interface utilisateur (111) à afficher sur l'application client (201) est réalisée par le sélecteur d'interfaces (102) utilisateur en fonction des données transmises au sélecteur par l'application client (201).

3. Système selon la revendication précédente, dans lequel les données transmises au sélecteur d'interfaces (102) utilisateur sont prises parmi les caractéristiques suivantes de l'appareil client (200) sur lequel est installée l'application client (201) : fonctionnalités de l'appareil client (200), orientation de l'appareil client (200) dans l'espace, thème de l'interface utilisateur (111) de l'appareil client (200), type d'appareil client (200), taille de l'écran de l'appareil client (200), système d'exploitation de l'appareil client (200), langue et géolocalisation de l'appareil client (200).

4. Système selon l'une quelconque des revendications précédentes, dans lequel les au moins un widget (113) de chacun des panneaux sont des boutons d'action et/ou des champs de remplissage.

5. Procédé de mise en œuvre du système selon les revendications précédentes, caractérisé ce que l'activation d'au moins une application client (201) entraine les étapes suivantes :
- transmission de données d'utilisation (300) depuis un appareil client (200) vers l'espace de panneaux (110) au travers du sélecteur d'interface (102
- transmission des données d'utilisation (300) depuis l'espace de panneaux (110) à l'espace virtuel (120
- transmission des données d'utilisation (300) depuis l'espace virtuel (120) à la partie logique (104),
- traitement par la partie logique (104) des données d'utilisation (300),
- transmission des données d'utilisation (300) par la partie logique (104) à l'espace virtuel (120) avec un statut de données traitées,
- transmission des données traitées par l'espace virtuel (120) à l'espace de panneaux (110),
- transmission des données traitées par l'espace de panneaux (110) à la au moins une application client (201).

6. Procédé selon la revendication précédente dans lequel l'activation d'un widget (113) présent sur le panneau (112) affiché sur l'appareil client (200) entraine successivement au moins les actions suivantes :
- transmission des données avec un statut de données d'utilisation (300) au panneau (112) correspondant dans l'espace de panneaux (110);
- activation du widget (113) du panneau (112) correspondant dans l'espace de panneaux (110),
- transmission des données d'utilisation (300) du widget (113) au namespace (121) associé dans l'espace virtuel (120),
- activation de l'objet d'interaction (122) du namespace (121) correspondant au widget (113) de l'espace de panneaux (110),
- envoi des données d'utilisation (300) à l'application principale (103) à partir du namespace (121),
- traitement des données d'utilisation (300) par l'application principale (103) et passage d'un statut de données d'utilisation (300) à un statut de données traitées,
- renvoi des données traitées à un namespace (121) identique ou différent de celui ayant transmis les données d'utilisation (300) depuis l'application principale (103) dans un objet d'interaction (122),
- envoi des données traitées depuis l'objet d'interaction (122) d'un namespace (121) à au moins un widget (113) correspondant dans l'espace de panneaux (110),
- envoi des données traitées depuis le au moins un widget (113) de l'espace de panneaux (110) vers au moins une application client (201).

7. Procédé selon la revendication précédente dans lequel l'espace virtuel (120) comprend plusieurs namespace (121) une étape d'échange de données d'utilisation (300) et/ou de données traitées entre namespace (121) est réalisée.

8. Procédé selon l'une quelconque des trois revendications précédentes comprenant préalablement à l'étape d'activation d'un widget (113) présent sur le panneau affiché sur l'appareil client (200), une étape de connexion à une session utilisateur.

9. Procédé selon la revendication précédente, dans lequel l'étape d'envoi des données traitées depuis l'objet d'interaction (122) d'un namespace (121) à au moins un widget (113) correspondant dans l'espace de panneaux (110), comprend l'envoi des données traitées à plusieurs widgets (113) correspondants.

10. Procédé selon l'une quelconque des deux revendications précédentes, dans lequel l'étape d'envoi des données traitées depuis le au moins un widget (113) de l'espace de panneaux (110) vers au moins une application client (201) comprend l'envoi des données traitées à plusieurs applications clientes.

11. Système selon l'une quelconque des revendications précédentes dans lequel l'application principale (103) reste active dans l'espace virtuel (120) lors de la déconnexion d'au moins une application client (201).

12. Système selon l'une quelconque des revendications précédentes dans lequel l'application principale (103) reste active dans l'espace virtuel (120) lors de la déconnexion de toutes les applications clients (201).

13. Produit programme d'ordinateur comprenant des instructions, qui lorsqu'elles sont effectuées par au moins un processeur, exécute au moins les étapes du procédé selon l'un quelconque des revendications 5 à 11.

## Patentansprüche

1. System, das die Erstellung und die Bereitstellung von Anwendungen auf mehreren Arten von Client-Geräten (200) ermöglicht, das eine Vielzahl von Client-Geräten (200) unterschiedlicher Arten, die jeweils mindestens eine Client-Anwendung (201) hosten, und einen mit der Vielzahl von Client-Geräten (200) in Kommunikation stehenden Server (100) umfasst, der mindestens eine Hauptanwendung (103) hostet, wobei die Hauptanwendung (103) mindestens einen Logikteil (104), einen Grafikteil (105) und einen Schnittstellenwähler (102) umfasst,
wobei der Grafikteil (105) ein virtuelles Modul zum Speichern einer Vielzahl von Benutzerschnittstellen (111), das als Fensterbereiche (110) bezeichnet wird, und ein virtuelles Modul zur Verwaltung der grafischen Schnittstellen umfasst, das als virtueller Bereich (120) bezeichnet wird, wobei der Schnittstellenwähler (102) so ausgelegt ist, dass er jeder Art von Client-Gerät (200) eine Art von Benutzerschnittstelle (111) zuordnet, wobei der virtuelle Bereich (120):
- mindestens ein Datenkommunikationsmodul umfasst, das als Namespace (121) bezeichnet wird, wobei der Namespace mindestens ein Interaktionsobjekt (122), wie etwa ein Feld zum Ausfüllen und/oder eine Tabelle und/oder eine Aktion umfasst;
- so ausgelegt ist, dass er die Kommunikation zwischen dem Logikteil (104) der Hauptanwendung (103) und dem Grafikteil (105) ermöglicht; und
- so ausgelegt ist, dass er den Aktivierungszustand der Hauptanwendung (103) nach Modifikationen, die von mindestens einer der Client-Anwendungen (201) angeordnet wurden, dauerhaft speichert,
wobei das System so ausgelegt ist, dass jede der Benutzerschnittstellen (111) mehrere Fenster umfasst, jedes der Fenster mindestens ein Widget (113) umfasst, und wobei das mindestens eine Widget (113) jedes Fensters mit einem aus dem mindestens einen Interaktionsobjekt (122) mindestens eines Namespaces (121) verknüpft ist, um mithilfe der Aktivierung der Widgets (113) und/oder der Interaktionsobjekte (122) Daten an den zugehörigen Namespace (121) zu senden und von diesem zu empfangen, wobei die Client-Anwendungen vorzugsweise so ausgelegt sind, dass sie ein einziges Fenster auf einmal anzeigen, wobei jedes der Client-Geräte (200) aus der Vielzahl von Client-Geräten (200) so ausgelegt ist, dass es mit einer eindeutigen Benutzersitzung verbunden werden kann, wobei das System so ausgelegt ist, dass es in Antwort auf eine Aktivierung der mindestens einen Client-Anwendung (201) mindestens die folgenden Schritte ausführt, wobei diese Schritte von mindestens einem Mikroprozessor ausgeführt werden:
- Empfangen von Daten, die der Aktivierung eines Widgets entsprechen, das in dem auf dem Client-Gerät angezeigten Fenster vorhanden ist, vom Client-Gerät (200) über den Schnittstellenwähler (102),
- Übertragen der Daten mit einem Status "Nutzungsdaten" (300) an das entsprechende Fenster (112) des Fensterbereichs (110),
- Aktivieren des Widgets (113) des entsprechenden Fensters (112) im Fensterbereich (110),
- Übertragen der Nutzungsdaten (300) vom Fenster (112) an den zugehörigen Namespace (121) im virtuellen Bereich (120),
- Aktivieren des Interaktionsobjekts (122) des Namespaces (121), das dem Widget (113) des Fensterbereichs (110) entspricht,
- Senden der Nutzungsdaten (300) vom virtuellen Bereich (120), insbesondere vom Namespace (121), an den Logikteil (104), insbesondere an die Hauptanwendung (103),
- Verarbeiten der Nutzungsdaten (300) durch den Logikteil (104) und Überführen der Nutzungsdaten (300) von einem Status "Nutzungsdaten" (300) auf einen Status "verarbeitete Daten",
- Zurücksenden der verarbeiteten Daten an einen Namespace (121), der mit dem, der die Nutzungsdaten (300) übertragen hat, identisch ist oder sich von diesem unterscheidet, von der Hauptanwendung (103), insbesondere vom Logikteil (104), an ein Interaktionsobjekt (122),
- Übertragen der verarbeiteten Daten vom virtuellen Bereich (120), und insbesondere vom Interaktionsobjekt (122) eines Namespaces (121) an mindestens ein entsprechendes Widget (113) im Fensterbereich (110),
Übertragen der verarbeiteten Daten von dem mindestens einen Widget (113) des Fensterbereichs (110) an die Client-Anwendungen der Vielzahl von Client-Geräten (201), wobei jede Modifikation auf einer der Benutzerschnittstellen (111) in der Folge auf den anderen Benutzerschnittstellen (111), die auf den verschiedenen Client-Geräten (200) angezeigt werden, übernommen wird.

2. System nach dem vorstehenden Anspruch, das so ausgelegt ist, dass die Auswahl der Benutzerschnittstelle (111), die in der Client-Anwendung (201) angezeigt werden soll, durch den Benutzerschnittstellenwähler (102) in Abhängigkeit von den Daten ausgeführt wird, die von der Client-Anwendung (201) an den Wähler übertragen werden.

3. System nach dem vorstehenden Anspruch, wobei die an den Benutzerschnittstellenwähler (102) übertragenen Daten aus den folgenden Merkmalen des Client-Geräts (200) ausgewählt sind, auf dem die Client-Anwendung (201) installiert ist: Funktionen des Client-Geräts (200), Ausrichtung des Client-Geräts (200) im Raum, Design der Benutzerschnittstelle (111) des Client-Geräts (200), Art des Client-Geräts (200), Größe des Bildschirms des Client-Geräts (200), Betriebssystem des Client-Geräts (200), Sprache und Geolokalisierung des Client-Geräts (200).

4. System nach einem der vorstehenden Ansprüche, wobei es sich bei dem mindestens einen Widget (113) jedes der Fenster um Aktionsschaltflächen und/oder Ausfüllfelder handelt.

5. Verfahren zum Einsatz des Systems nach den vorstehenden Ansprüchen, **dadurch gekennzeichnet, dass** die Aktivierung mindestens einer Client-Anwendungen (201) die folgenden Schritte nach sich zieht:
- Übertragen von Nutzungsdaten (300) von einem Client-Gerät (200) über den Schnittstellenwähler (102) zum Fensterbereich (110),
- Übertragen der Nutzungsdaten (300) vom Fensterbereich (110) an den virtuellen Bereich (120),
- Übertragen der Nutzungsdaten (300) vom virtuellen Bereich (120) an den Logikteil (104),
- Verarbeiten der Nutzungsdaten (300) durch den Logikteil (104),
- Übertragen der Nutzungsdaten (300) durch den Logikteil (104) mit einem Status "verarbeitete Daten" an den virtuellen Bereich (120),
- Übertragen der verarbeiteten Daten durch den virtuellen Bereich (120) an den Fensterbereich (110),
- Übertragen der verarbeiteten Daten durch den Fensterbereich (110) an die mindestens eine Client-Anwendung (201).

6. Verfahren nach dem vorstehenden Anspruch, wobei die Aktivierung eines Widgets (113), das in dem auf dem Client-Gerät (200) angezeigten Fenster (112) vorhanden ist, nacheinander mindestens die folgenden Aktionen nach sich zieht:
- Übertragen der Daten mit einem Status "Nutzungsdaten" (300) an das entsprechende Fenster (112) im Fensterbereich (110),
- Aktivieren des Widgets (113) des entsprechenden Fensters (112) im Fensterbereich (110),
- Übertragen der Nutzungsdaten (300) des Widgets (113) an den zugehörigen Namespace (121) im virtuellen Bereich (120),
- Aktivieren des Interaktionsobjekts (122) des Namespaces (121), der dem Widget (113) des Fensterbereichs (110) entspricht,
- Senden der Nutzungsdaten (300) vom Namespace (121) aus an die Hauptanwendung (103),
- Verarbeiten der Nutzungsdaten (300) durch die Hauptanwendung (103) und Überführen von einem Status "Nutzungsdaten" (300) auf einen Status "verarbeitete Daten",
- Zurücksenden der verarbeiteten Daten an einen Namespace (121), der mit dem, der die Nutzungsdaten (300) übertragen hat, identisch ist oder sich von diesem unterscheidet, von der Hauptanwendung (103) in ein Interaktionsobjekt (122),
- Senden der verarbeiteten Daten vom Interaktionsobjekt (122) eines Namespaces (121) an mindestens ein entsprechendes Widget (113) im Fensterbereich (110),
- Senden der verarbeiteten Daten von dem mindestens einen Widget (113) des Fensterbereichs (110) zu mindestens einer Client-Anwendung (201).

7. Verfahren nach dem vorstehenden Anspruch, wobei der virtuelle Bereich (120) mehrere Namespaces (121) umfasst, ein Schritt des Austauschens von Nutzungsdaten (300) und/oder von verarbeiteten Daten zwischen Namespaces (121) ausgeführt wird.

8. Verfahren nach einem der drei vorstehenden Ansprüche, das vor dem Schritt des Aktivierens eines Widgets (113), das in dem auf dem Client-Gerät (200) angezeigten Fenster vorhanden ist, einen Schritt des Verbindens mit einer Benutzersitzung umfasst.

9. Verfahren nach dem vorstehenden Anspruch, wobei der Schritt des Sendens der verarbeiteten Daten vom Interaktionsobjekt (122) eines Namespaces (121) an mindestens ein entsprechendes Widget (113) im Fensterbereich (110) das Senden der verarbeiteten Daten an mehrere entsprechende Widgets (113) umfasst.

10. Verfahren nach einem der zwei vorstehenden Ansprüche, wobei der Schritt des Sendens der verarbeiteten Daten von dem mindestens einen Widget (113) des Fensterbereichs (110) zu mindestens einer Client-Anwendung (201) das Senden der verarbeiteten Daten an mehrere Client-Anwendungen umfasst.

11. System nach einem der vorstehenden Ansprüche, wobei bei der Trennung mindestens einer Client-Anwendung (201) die Hauptanwendung (103) im virtuellen Bereich (120) aktiv bleibt.

12. System nach einem der vorstehenden Ansprüche, wobei bei der Trennung aller Client-Anwendungen (201) die Hauptanwendung (103) im virtuellen Bereich (120) aktiv bleibt.

13. Computerprogrammprodukt, das Anweisungen umfasst, die, wenn sie von mindestens einem Prozessor ausgeführt werden, mindestens die Schritte des Verfahrens nach einem der Ansprüche 5 bis 11 ausführen.

## Claims

1. System for creating and deploying applications on a plurality of types of client device (200), comprising a plurality of client devices (200) of various types each hosting at least one client application (201) and a server (100) in communication with said plurality of client devices (200) hosting at least one main application (103), said main application (103) comprising at least a logic part (104), a graphical part (105) and an interface selector (102),
said graphical part (105) comprising a virtual module for storing a plurality of user interfaces (111) referred to as panel spaces (110) and a virtual module for managing the graphical interfaces referred to as a virtual space (120), said interface selector (102) being configured so as to make a type of user interface (111) correspond to each type of client device (200), said virtual space (120):
- comprises at least one data communication module, referred to as namespace (121), said namespace comprising at least one interaction object (122) such as a filler field and/or a table and/or an action;
- is configured to allow communication between the logic part (104) of the main application (103) and the graphical part (105); and
- is configured to permanently store the state of activation of the main application (103) following modifications ordered by at least one of the client applications (201),
the system being configured so that each of the user interfaces (111) comprises a plurality of panels and each of the panels comprises at least one widget (113), and wherein the at least one widget (113) of each panel is associated with one of the at least one interaction object (122) of at least one namespace (121) in order to receive and send data to said associated namespace (121) by means of the activation of the widgets (113) and/or of the interaction objects (122), the client applications preferably being configured to display only one panel at a time, each of the client devices (200) in the plurality of client devices (200) being configured to be connected to a single user session, the system being configured so as to perform at least the following steps in response to an activation of the at least one client application (201), these steps being performed by at least one microprocessor:
- receiving from the client device (200) through the interface selector (102) data corresponding to the activation of a widget present on the panel displayed on the client device,
- transmitting said data with a status of use data (300) to the corresponding panel (112) of the panel space (110),
- activating the widget (113) of the corresponding panel (112) in the panel space (110),
- transmitting said use data (300) from said panel (112) to the associated namespace (121) in the virtual space (120),
- activating the interaction object (122) of the namespace (121) corresponding to said widget (113) of the panel space (110),
- sending the use data (300) from the virtual space (120), in particular from the namespace (121), to the logic part (104), in particular to the main application (103),
- processing the use data (300) by the logic part (104) and changing said use data (300) from a status of use data (300) to a status of processed data,
- sending the processed data to a namespace (121) identical to or different from the one that transmitted the use data (300) from the main application (103), in particular from the logic part (104), to an interaction object (122),
- transmitting the processed data from the virtual space (120) and in particular from the interaction object (122) of a namespace (121) to at least one corresponding widget (113) in the panel space (110),
transmitting the processed data from the at least one widget (113) of the panel space (110) to the client applications of the plurality of client devices (201), each modification on one of the user interfaces (111) consequently affecting the other user interfaces (111) displayed on the various client devices (200).

2. System according to the preceding claim, configured so that the user interface (111) to be displayed on the client application (201) is selected by the user interface selector (102) according to the data transmitted to the selector by the client application (201).

3. System according to the preceding claim, wherein the data transmitted to the user interface selector (102) are taken from the following characteristics of the client device (200) on which the client application (201) is installed: functionalities of the client device (200), orientation of the client device (200) in space, theme of the user interface (111) of the client device (200), type of client device (200), size of the screen of the client device (200), operating system of the client device (200), language and geolocation of the client device (200).

4. System according to any one of the preceding claims, wherein the at least one widget (113) of each of the panels are action buttons and/or filler fields.

5. Method for implementing the system according to the preceding claims, **characterised in that** activating at least one client application (201) entails the following steps:
- transmitting use data (300) from a client device (200) to the panel space (110) through the interface selector (102),
- transmitting the use data (300) from the panel space (110) to the virtual space (120),
- transmitting use data (300) from the virtual space (120) to the logic part (104),
- processing the use data (300) by the logic part (104),
- transmitting the use data (300) by the logic part (104) to the virtual space (120) with a status of processed data,
- transmitting the processed data by the virtual space (120) to the panel space (110),
- transmitting the processed data by the panel space (110) to the at least one client application (201).

6. Method according to the preceding claim, wherein activating a widget (113) present on the panel (112) displayed on the client device (200) entails successively at least the following actions:
- transmitting the data with a status of use data (300) to the corresponding panel (112) in the panel space (110),
- activating the widget (113) of the corresponding panel (112) in the panel space (110),
- transmitting the use data (300) of the widget (113) to the associated namespace (121) in the virtual space (120),
- activating the interaction object (122) of the namespace (121) corresponding to the widget (113) of the panel space (110),
- sending the use data (300) to the main application (103) from the namespace (121),
- processing the use data (300) by the main application (103) and passing from a status of use data (300) to a status of processed data,
- returning the processed data to a namespace (121) identical to or different from the one that transmitted the use data (300) from the main application (103) in an interaction object (122),
- sending the processed data from the interaction object (122) of a namespace (121) to at least one corresponding widget (113) in the panel space (110),
- sending the processed data from the at least one widget (113) of the panel space (110) to at least one client application (201).

7. Method according to the preceding claim, wherein the virtual space (120) comprises a plurality of namespaces (121) and a step of exchanging use data (300) and/or processed data between namespaces (121) is performed.

8. Method according to any one of the preceding three claims, comprising, prior to the step of activating a widget (113) present on the panel displayed on the client device (200), a step of connecting to a user session.

9. Method according to the preceding claim, wherein the step of sending processed data from the interaction object (122) of a namespace (121) to at least one corresponding widget (113) in the panel space (110) comprises sending the processed data to a plurality of corresponding widgets (113).

10. Method according to either one of the preceding two claims, wherein the step of sending the processed data from the at least one widget (113) of the panel space (110) to at least one client application (201) comprises sending the processed data to a plurality of client applications.

11. System according to any one of the preceding claims, wherein the main application (103) remains active in the virtual space (120) when at least one client application (201) is disconnected.

12. System according to any one of the preceding claims, wherein the main application (103) remains active in the virtual space (120) when all the client applications (201) are disconnected.

13. Computer program product comprising instructions which, when they are implemented by at least one processor, performs at least the steps of the method according to any one of claims 5 to 11.
